# EUROPEAN PATENT APPLICATION

(11) **EP 1 011 053 A2**
(43) Date of publication of application: **21.06.2000**
(21) Application number: 99124660.4
(22) Date of filing: 10.12.1999
(51) Int. Cl.: G06F 17/21

(54) **'WWW'-browser for outputting still image constituting animation on 'Web'-page and storage medium storing therein program thereof**

(30) Priority: 14.12.1998 JP 35524098
(71) Applicant: NEC CORPORATION, Tokyo (JP)
(72) Inventor: Takahashi, Yoko, c/o NEC Corporation, Tokyo (JP)
(74) Representative: von Samson-Himmelstjerna, Friedrich R., Dipl.-Phys.

(57) **Abstract**

A 'VAVW'-browser and a storage medium storing therein a program thereof in which the user can freely select still image constituting an animation, and the user is capable of performing layout of image data for the sake of output and an 'Web'-page on the occasion for printing the 'Web'-page including the animation. An image information acquisition measure obtains information about an animation within an 'Web'-page from an 'HTML'-file interpretation measure for interpreting data of the 'Web'-page. An image data acquisition variable establishment measure causes a parameter-input value from user instruction input measure to be an image data acquisition variable. An image data acquisition measure captures an animation displayed on a CRT display based on information acquired and an image data acquisition variable establishment value to acquire image data, thus selecting image data intended to use for the sake of printing from among the image data by a printing image data selection measure.

## Description

### BACKGROUND OF THE INVENTION

The present invention relates to a 'WWW' (World Wide Web)-browser which outputs still image constituting an animation on an 'Web'-page and to a storage medium into which the program thereof is stored. More to particularly, the invention relates to the 'WWW'-browser and the storage medium storing therein program thereof which are capable of selecting freely a still image desired by the user from a plurality of still images constituting the animation.

### Description of the Prior Art

Formerly, when the user prints an 'Web'-page including an animation using printing function of a 'WWW'-browser, the printing is implemented following procedures:
(1) one of still images which constitute animation is selected by 'WWW'-browser;
(2) data of the selected still image is read; and
(3) the read image data is embedded in an area where the animation is displayed on the 'Web'-page,

Printing data is formed in accordance with above-described procedure, thus printing is implemented according to the printing data.

However, there are problems in the conventional 'WWW'-browser as follows:
(1) When the conventional printing system prints an 'Web'-page including the animation, one of the still images which constitute the animation is selected as an image data used for the sake the printing. However, the user can not select it freely. The reason why the conventional 'Web'-browser does not include such function of causing the user to select the still image intended to print freely from among the animation as an image data for outputting on the occasion of printing of the 'Web' page including the animation.
(2) Further, when the printing system prints the 'Web'-page including the animation, a layout on the occasion of printing is confined that only the image data outputted is embedded in the animation area on the 'Web'-page, therefore, the user can not deal with freely. The reason why the conventional 'Web'-browser does not include the function of causing the user to select both of the image data for the sake of output and the layout of the 'Web'-page on the occasion of printing of the 'Web'-page including the animation.

### SUMMARY OF THE INVENTION

In view of the foregoing, it is an object of the present invention, in order to overcome the above-mentioned problem to provide a 'WWW'-browser which outputs a still image constituting an animation on the 'Web'-page and a storage medium storing therein program thereof in which the user can select image data for the sake of outputting within the still images constituting the animation and can perform layout the image data for the sake of outputting and the 'Web'-page on the occasion of printing of the 'Web'-page including animation.

According to a first embodiment of the present invention, in order to achieve the above-mentioned object, there is provided a 'WWW'-browser for outputting a still image constituting an animation on an 'Web'-page, which 'WWW'-browser is to access an 'Web'-page to be Hyper Text Markup Language file (hereinafter referred to as 'HTML'-file) including an animation program which comprises an 'HTML'-file interpretation means for interpreting content of the 'HTML'-file and the animation program, an image information acquisition means for acquiring information concerning an animation within the 'Web'-page according to an interpretation result of the 'HTML'-file interpretation means, an image data acquisition variable establishment means for establishing a parameter inputted as an image data acquisition variable, an image data acquisition means for capturing an animation displayed on a display device based on information acquired by the image information acquisition means and establishment value of the image data acquisition variable establishment means, and a printing image data selection means for selecting image data in order to use for the sake of printing from among image data captured by the image data acquisition means.

As described above, due to the configuration of the first aspect, the image information acquisition means acquires information concerning an animation within the 'web'-page from interpretation result of the 'HTML'-file and the animation program according to the 'HTML'-file interpretation means. The image data acquisition variable establishment means establishes a parameter inputted by the user as the image data acquisition variable, thus the animation displayed on the display device is captured according to the image data acquisition means based on the establishment value and the information due to the image information acquisition means, subsequently, the image data to use for the sake of printing is selected by the printing image data selection means from among the image data captured. The printing data is prepared based on the image data according to the selection of the printing image data selection means. Consequently, it is capable of selecting voluntarily the still image constituting the animation as the image data for the sake of output, on the occasion for printing the 'Web'-page including the animation.

According to a second aspect of the present invention, there is provided a 'WWW'-browser for outputting a still image constituting an animation on an 'Web'-page, which 'WWW'-browser is to access an 'Web'-page to be an 'HTML'-file including an animation program, and which comprises an 'HTML'-file interpretation means for interpreting contents of the 'HTML'-file and the animation program, an image information acquisition means for acquiring information concerning animation within the 'Web'-page according to interpretation result of the 'HTML'-file interpretation means, an image data acquisition variable establishment means for establishing a parameter inputted as an image data acquisition variable, an image data acquisition means for capturing an animation displayed on a display device based on the information acquired by the image information acquisition means and an establishment value of the image data acquisition variable establishment means, a printing image data selection means for selecting image data using for the sake of printing from among the image data captured by the image data acquisition means, a page layout storage means for storing therein plural kinds of page layouts, a page layout selection means for selecting layout using for the sake of printing from among the plural kinds of page layouts stored in the page layout storage means, and a printing data preparation means for preparing printing data that the image data selected by the printing image data selection means is subjected to layout in accordance with a page layout selected by the page layout selection means.

As described above, due to the configuration of the second aspect, in addition to operation of the configuration of the first aspect, the page layout selection means is capable of selecting the layout to use for the sake of printing from among the plural kinds of page layouts stored in the page layout storage means, thus the printing data is prepared by the printing data preparation means based on the layout selected.

According to a third aspect of the present invention, there is provided a 'WWW'-browser for outputting a still image constituting an animation on an 'Web'-page, which 'WWW'-browser is to access an 'Web'-page to be an 'HTML'-file including an animation program and image information, and which comprises an 'HTML'-file interpretation means for interpreting respective contents of the 'HTML'-file, the animation program, and the image information, an image information acquisition means for acquiring information concerning an animation within the 'Web'-page based on interpretation result according to the 'HTML'-file interpretation means, an image data acquisition variable establishment means for establishing a parameter inputted as an image data acquisition variable, an image data read-out means for acquiring image data in such a way that the image data read-out means causes image file on an 'Web'-server to access based on information acquired by the image information acquisition means and a value established by the image data acquisition variable establishment means, and a printing image data selection means for selecting image data using for the sake of printing from among image data read from the image data read-out means.

As described-above, due to the configuration of the third aspect, information concerning the image data constituting the animation within the 'Web'-page is obtained by the image information acquisition means from the interpretation result of the 'HTML-file, the animation program, and the image information according to the 'HTML'-file interpretation means. The parameter inputted by the user is established by the image data acquisition variable establishment means as the image data acquisition variable. The image file on the 'Web'-server is accessed by the image data read-out means based on the information acquired by the image information acquisition means and the establishment value, thus the image data to use for the sake of printing is selected by the printing image data selection means from among the image data which is read according to this access. The printing data is prepared based on the image data selected by the printing image data selection means. Consequently, the still image constituting the animation is capable of being selected voluntarily as the image data for the sake of output on the occasion for printing the 'Web'-page including the animation.

According to a fourth aspect of the present invention, there is provided a 'WWW'-browser for outputting a still image which constitutes an animation on an 'Web'-page, which 'WWW'-browser is to access an 'Web'-page to be an 'HTML'-file including an animation program and image information, and which comprises an 'HTML-file interpretation means for interpreting respective contents of the 'HTML-file, the animation program, and the image information, an image information acquisition means for acquiring information concerning an animation within the 'Web'-page based on interpretation result according to the 'HTML'-file interpretation means, an image data acquisition variable establishment means for establishing a parameter inputted as an image data acquisition variable, an image data read-out means for acquiring image data in such a way that the image data read-out means causes image file on an 'Web'-server to access based on information acquired by the image information acquisition means and a value established by the image data acquisition variable establishment means, a printing image data selection means for selecting image data using for the sake of printing from among image data read from the image data read-out means, a page layout storage means for storing therein plural kinds of page layouts, a page layout selection means for selecting layout using for the sake of printing from among the plural kinds of page layouts stored in the page layout storage means, and a printing data preparation means for preparing printing data that the image data selected by the printing image data selection means is subjected to layout in accordance with a page layout selected by the page layout selection means.

As described-above, due to the configuration, in addition to operation of the third aspect, it is capable of selecting the layout to use for the sake of printing by the page layout selection means from among the plural kinds of page layouts stored in the page layout storage means, thus the printing data is prepared by the printing data preparation means based on the layout selected.

According to a fifth aspect of the present invention, there is provided a storage medium in a 'WWW'-browser for accessing an 'Web'-page to be an 'HTML'-file including an animation program, which storage medium stores therein a program for causing a computer to execute the following processing of 'HTML'-file interpretation processing for interpreting contents of the 'HTML'-file and the animation program, image information acquisition processing for acquiring information concerning an animation within said 'Web'-page according to interpretation result of said 'HTML'-file interpretation processing, image data acquisition variable establishment processing for establishing a parameter inputted as an image data acquisition variable, image data acquisition processing for capturing an animation displayed on a display device based on information acquired by said image information acquisition processing and establishment value of said image data acquisition variable establishment processing, and printing image data selection processing for selecting image data using for the sake of printing from among the image data captured by the image data acquisition processing.

As described-above, due to the configuration of the fifth aspect, the image information acquisition processing acquires information concerning the animation within the 'Web'-page from the interpretation result of the 'HTML'-file and the animation program according to the 'HTML'-file interpretation processing. The image data acquisition variable establishment processing establishes the parameter inputted by the user as the image data acquisition variable, thus the animation displayed on the display device is captured by the image data acquisition processing based on this establishment value and the information according to the image information acquisition processing. The image data to use for the sake of printing is selected by the printing image data selection processing from among the image data captured. The printing data is prepared based on the image data according to selection of the printing image data selection processing. Consequently, it is capable of selecting voluntarily the still image constituting the animation as the image data for the sake of output, on the occasion for printing the 'Web'-page including the animation.

According to a sixth aspect of the present invention, there is provided a storage medium in a 'WWW'-browser for accessing an 'Web'-page to be an 'HTML'-file including an animation program, storing therein a program for causing a computer to execute the following processing of an 'HTML'-file interpretation processing for interpreting contents of the 'HTML'-file and the animation program, an image information acquisition processing for acquiring information concerning an animation within the 'Web'-page according to interpretation result of the 'HTML'-file interpretation processing, an image data acquisition variable establishment processing for establishing a parameter inputted as an image data acquisition variable, an image data acquisition processing for capturing an animation displayed on a display device based on information acquired by the image information acquisition processing and establishment value of the image data acquisition variable establishment processing, and a printing image data selection processing for selecting image data using for the sake of printing from among the image data captured by the image data acquisition processing, a page layout storage processing for storing plural kinds of page layouts, a page layout selection processing for selecting layout to use for the sake of printing from among the plural kinds of page layouts stored in the page layout storage processing, and a printing data preparation processing for preparing printing data that the image data selected by said printing image data selection processing is subjected to layout in accordance with a page layout selected by said page layout selection processing.

As described-above, due to the operation of the configuration in addition to the fifth aspect, it is capable of selecting the layout to use for the sake of printing by the page layout selection processing from among the plural kinds of page layouts stored in page layout storage processing, thus the printing data is prepared by the printing data preparation processing based on the layout selected.

According to a seventh aspect of the present invention, there is provided a storage medium in a 'WWW'-browser for accessing an 'Web'-page to be an 'HTML'-file including an animation program and image information, storing therein a program for causing a computer to execute the following processing of an 'HTML'-file interpretation processing for interpreting respective contents of the 'HTML'-file, the animation program, and the image information, an image information acquisition processing for acquiring information concerning an animation within the 'Web'-page according to interpretation result of the processing of 'HTML'-file interpretation, an image data acquisition variable establishment for establishing a parameter inputted as an image data acquisition variable, an image data read-out processing for acquiring an image data in such a way of accessing an image file on an 'Web'-server based on information acquired by the image information acquisition processing and value establishment by the image data acquisition variable establishment processing, and printing image data selection processing for selecting image data using for the sake of printing from among the image data read by the image data read-out processing.

As described-above, due to the configuration, the information concerning the image data constituting the animation within the 'Web'-page by the image information acquisition processing from the interpretation result of the 'HTML-file, the animation program, and the image information according to the 'HTML'-file interpretation processing. The parameter inputted by the user is established by the image data acquisition variable establishment processing as the image data acquisition variable. The image file on the 'Web'-server is accessed by the image data read-out processing based on the establishment value and the information acquired by the image information acquisition processing. The image data to use for the sake of printing is selected by the printing image data selection processing from among image data read-out according to this access. The printing data is prepared according to the image data selected by this printing image data selection processing. Consequently, it is capable of selecting voluntarily the still image constituting the animation as the image data for the sake of output, on the occasion for printing the 'Web'-page including the animation.

According to an eighth aspect of the present invention, there is provided a storage medium in a 'WWW'-browser for accessing an 'Web'-page to be an 'HTML'-file including an animation program and image information, storing therein a program for causing a computer to execute the following processing of an 'HTML'-file interpretation processing for interpreting respective contents of the 'HTML'-file, the animation program, and the image information, an image information acquisition processing for acquiring information concerning an animation within the 'Web'-page according to interpretation result of the 'HTML'-file interpretation processing, an image data acquisition variable establishment processing for establishing a parameter inputted as an image data acquisition variable, an image data read-out processing for acquiring an image data in such a way of accessing an image file on an 'Web'-server based on information acquired by the image information acquisition processing and value establishment by the image data acquisition variable establishment processing, a printing image data selection processing for selecting image data using for the sake of printing from among the image data read by the image data read-out processing, page layout storage processing for storing plural kinds of page layouts, page layout selection processing for selecting layout using for the sake of printing from among the plural kinds of page layouts stored in the processing of page layout storage, and a printing data preparation processing for preparing printing data that the image data selected by the printing image data selection processing is subjected to layout in accordance with a page layout selected by the page layout selection processing.

As described-above, due to the configuration of the operation in addition to the seventh aspect, it is capable of selecting the layout to use for the sake of printing by the page layout selection processing from among the plural kinds of page layouts stored in the page layout storage processing.

The above and further objects and novel features of the invention will be more fully understood from the following detailed description when the same is read in connection with the accompanying drawings. It should be expressly understood, however, that the drawings are for purpose of illustration only and are not intended as a definition of the limits of the invention.

### BRIEF DESCRIPTION OF THE DRAWINGS

Fig. 1 is a block diagram showing a configuration of a first embodiment of the present invention;
Fig. 2 is a flowchart for explaining operation of the first embodiment of the present invention;
Fig. 3 is a figure for explaining operation of 'WWW'-browser according to the present invention;
Fig. 4 is a dialog to input image data acquisition parameter of the first embodiment of the present invention;
Fig. 5 is a block diagram showing a configuration of a second embodiment of the present invention;
Fig. 6 is a flowchart for explaining operation of the second embodiment of the present invention;
Fig. 7 is a dialog to input image data acquisition parameter of the second embodiment of the present invention;
Fig. 8 is a block diagram showing a configuration of a third embodiment of the present invention;
Fig. 9 is a flowchart for explaining operation of the third embodiment of the present invention;
Fig. 10 is a block diagram sowing a configuration of a fourth embodiment of the present invention; and
Fig. 11 is a flowchart for explaining operation of the fourth embodiment of the present invention.

### DETAILED DESCRIPTION OF THE PREFERRED EMBODIMENTS

Preferred embodiments of the present invention will now be described in detail in accordance with the accompanying drawings.

### [FIRST EMBODIMENT]

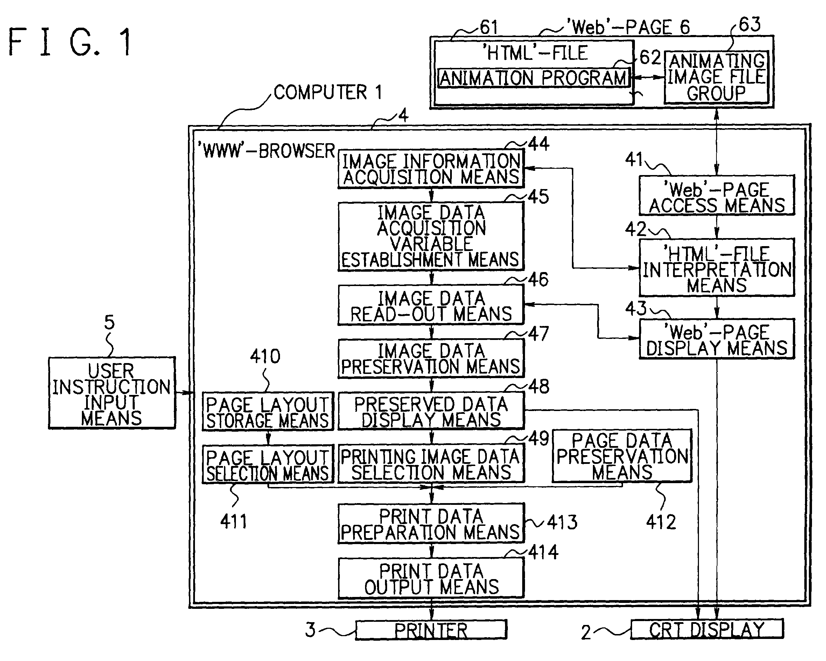

Fig. 1 shows a first embodiment of a system for achieving a 'WWW'-browser according to the present invention. As shown in Fig. 1, a computer 1 into which a 'WWW'-browser 4 is incorporated operates by virtue of CPU. The computer 1 is connected to a CRT-display 2 as being a display device, a printer 3 as being an output device, and a user instruction input means 5. A keyboard, a mouse, and so forth are used as the user instruction input means 5. The user inputs instruction or data to the 'WWW'-browser 4 by the user instruction input means 5. The inputted instructions or data are processed by the 'WWW'-browser, resulting in choices or execution result in respective processes. The contents thereof are displayed on the CRT-display 2 to assist the user.

The computer 1 is capable of accessing a 'Web'-page 6 using 'WWW'-browser 4. The 'WWW'-browser 4 comprises a 'Web'-page access means, an 'HTML' (Hyper Text Markup Language)-file interpretation means 42, an 'Web'-page display means 43, an image information acquisition means 44, an image data acquisition variable establishment means 45, an image data acquisition means 46, an image data preservation means 47, a preserved data display means 48, a printing image data selection means 49, a page layout storage means 410, a page layout selection means 411, a page data preservation means 412, a printing data preparation means 413, and a printing data output means 414. Further, the 'Web'-page 6 comprises an 'HTML'-file 61, an animation program 62, and an animating image file group 63.

Here, there will be described operation (Function) of the 'WWW'-browser 4. The 'WWW'-browser 4 displays the 'Web'-page 6 which includes an animation on the CRT-display 2 as an image. Also the 'WWW'-browser 4 has a function for causing the 'Web'-page 6 including the animation to a space to be printed by using the printer 3. The 'Web'-page 6 is the 'HTML'-film 61 including the animation program 62. The animation program 62 causes the image data included in the animating image file group 63 to be read out therefrom successively to display to the CRT-display 2. The user can observe the animation according to the animation program 62 by the screen.

The 'Web'-page access means 41 accesses to the 'Web'-page 6 on the 'Web'-server, and has function for reading the 'HTML-file 61 and the animation program 62 included therein. The 'HTML'-file interpretation means 42 interprets the 'HTML'-file 61 and the animation program 62 read by the 'Web'-page access means 41. The 'Web'-page display means 43 displays the interpreted result which is obtained in such a way that the 'HTML'-file interpretation means 42 interprets the 'HTML'-file 61 and the animation program 62 on the CRT-display 2. On this occasion, the animation program 62 causes the image data included in the animating image file group 63 to be read successively to be displayed, therefore, the animation is displayed on the CRT-display 2.

The image information acquisition means 44 acquires information about the animation from the interpretation result of the 'HTML'-file 61 and the animation program 62 due to the 'HTML'-file interpretation means 42. Namely, the image information acquisition means 44 acquires information that the animation is included in what area of the 'Web'-page 6, and that it causes the image data to be displayed how many total pieces in every how many of second. Such information is the information of implementation for display as the animation. The image data acquisition variable establishment means 45 which receives therein a parameter-input from the user, establishes the parameter-input as the image data acquisition variable. The image data acquisition means 46 causes the 'Web'-page display means 43 to capture the animation displayed on the CRT-display 2 according to information acquired by the image information acquisition means 44, and a value established by the image data acquisition variable establishment means 45 to acquire printing image data.

The image data preservation means 47 preserves temporarily the image data which the image data acquisition means 46 acquires. The preserved data display means 48, when the image data acquisition means 46 acquires to be completed the whole image data, displays the image data which is preserved in the image data preservation means 47 on the CRT-display 2. The printing image data selection means 49 selects the image data used for the printing from among the image data displayed by the preserved data display means 48 in accordance with input of the user.

The page data preservation means 412 preserves page data for the sake of printing, which is generated in such a way that the 'HTML'-file interpretation means 42 interprets the whole of the 'Web'-page 6. The page layout storage means 410 stores therein plural kinds of page layouts for performing layout of the image data selected by the printing image data selection means 49 and page data preserved in the page data preservation means 412. The page layout selection means 411 selects a layout used for the printing from among the plural kinds of the page layouts stored in the page layout storage means 410 in accordance with the input content of the user.

The printing data preparation means 413 prepares the printing data which is obtained in such a way that the image data selected by the printing image data selection means 49 and the page data preserved by the page data preservation means 412 are performed layout in accordance with the page layout selected by the page layout selection means 411. The printing data output means 414 sends the printing data prepared by the printing data preparation means 413 to the printer 3.

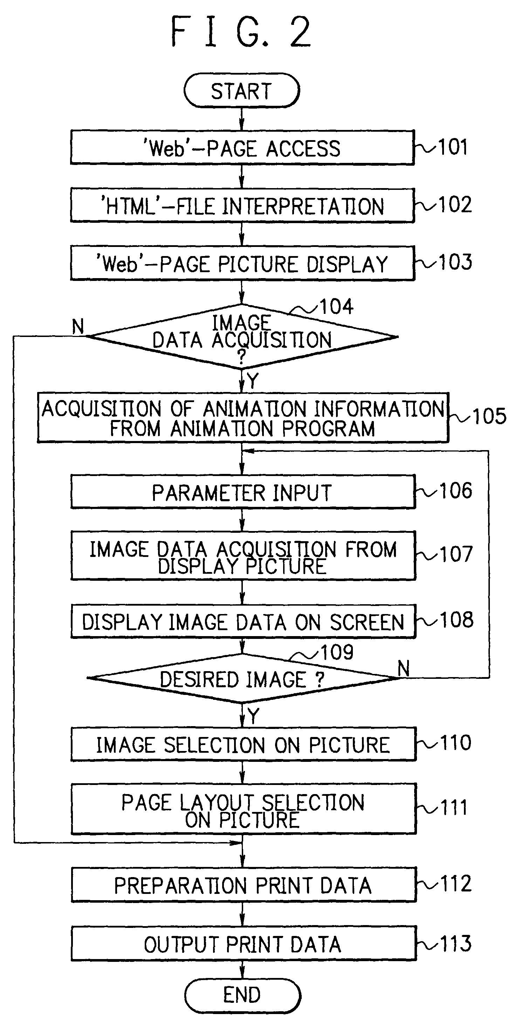

Next, there will be described operation of the first embodiment referring to the configuration of Fig. 1 and flowchart of Fig. 2.

Firstly, when the 'WWW'-browser on the computer 1 causes the 'Web'-page 6 to be displayed on the CRT-display 2, the user inputs an address of the 'Web'-page 6 to the 'WWW'-browser 4 using the user instruction input means 5. The 'Web'-page access means 41 accesses the 'Web'-page 6 on the 'Web' server using this address (STEP S101), before implementing read-in of the 'HTML'-file 61 constituting the 'Web'-page 6 and the animation program 62 included therein. The 'HTML'-file 61 and the animation program 62 which are read are interpreted by the 'HTML'-file interpretation means 42 (STEP S102), before being displayed on the CRT-display 2 by the 'Web'-page display means 43 (STEP S103). On this occasion, the animation program 62 reads to be displayed the image data included in the animating image file group 63 successively, so that the animation is displayed on the CRT-display 2.

Here, when the user prints the 'Web'-page 6 using the printer 3, the user intends to select the most appropriate one from among the still images constituting the animation by himself as outputting image data (STEP S104), The image information acquisition means 44 obtains information that the animation is included in what area of the 'Web'-page 6, and that display is implemented as the animation while displaying how many total pieces of image data in every how many of second from the interpretation result of the 'HTML'-file 61 and the animation program 62 according to the 'HTML'-file interpretation means 61 (STEP S105).

Next, the image data acquisition variable establishment means 45 receives the parameter-input from the user instruction input means 5 according to the user, before establishing it as an image data acquisition variable (STEP S106). The 'Web'-page display means 43 causes the image data acquisition means 46 to capture the animation displayed on the CRT-display 2 according to the information acquired by the image information acquisition means 44 and value established by the image data acquisition variable establishment means, thereby the printing image data is acquired (STEP S107). The image data which is acquired is preserved in the image data preservation means 47 temporarily.

When the image data acquisition means 46 acquires to be completed the whole image data, the image data preserved in the image data preservation means 47 is displayed on the CRT-display 2 by the preserved data display means 48 (STEP S108). When if the image data which the user intends to print is not included among the image data (N of STEP S109), the user does over again input of parameter to the image data acquisition variable establishment means 45 of STEP S106. On the other hand, when the image data which the user intends to print is included (Y of STEP S109), the user specifies the image data intended to use for the sake of printing. The printing image data selection means 49 selects the image data specified in answer to this specification (STEP S110).

Further, the page data preservation means 412 preserves therein the page data for printing the whole of the 'Web'-page 6 generated by the 'HTML'-file interpretation means 42, and the page layout storage means 410 stores therein the image data selected by the printing image data selection means 49 and plural kinds of page layouts for performing layout of the page data preserved in the page data preservation means 412. These page Layouts are displayed on the CRT-display 2. The user observes these layouts, before specifying the page layout intended printing by the user instruction input means 5, thus the page layout selection means 411 selects the specified page layout (STEP S111). As a result thereof, the printing data preparation means 413 prepares printing data undergoing layout on the image data selected by the printing image data selection means 49, and on the page data preserved in the page data preservation means 412 in accordance with the page layout selected by the page layout selection means 411 (STEP S112), before the printing data is sent to the printer 3 by the printing data output means 414 (STEP S113), thus printing is implemented.

Furthermore, when it is not necessary to select the image data for the sake of output by the user himself on the occasion that the user prints the 'Web'-page 6 including the animation with the printer 3 (STEP S104), the 'WWW'-browser 4 selects the image data for the sake of output and the page layout according to appropriate rules to prepare printing data (STEP S112), subsequently, the printed data is sent to the printer 3 by the printing data output means (STEP S113), thus printing is implemented.

As described-above, in the first embodiment of the present invention, the 'Web'-page display means causes the image data acquisition means 46 to capture the animation displayed on the CRT-display 2 to acquire the printing image data according to the information acquired by the image information acquisition means 44 and the value established by the image data acquisition variable establishment means 45. The printing image data selection means 49 selects the image data intended to use for the sake of printing from among them.

For that reason, the user can select freely an appropriate one to use for the sake of printing from the still images constituting the animation.

Further, in the present embodiment, the page layout selection means 411 selects the page layout intended to use for the sake of printing from among the page layout stored in the page layout storage means 410, therefore, can perform layout freely the image data selected by the user together with the page data selected by the page layout selection means 411.

Next, there will be described operation of the present embodiment using concrete image.

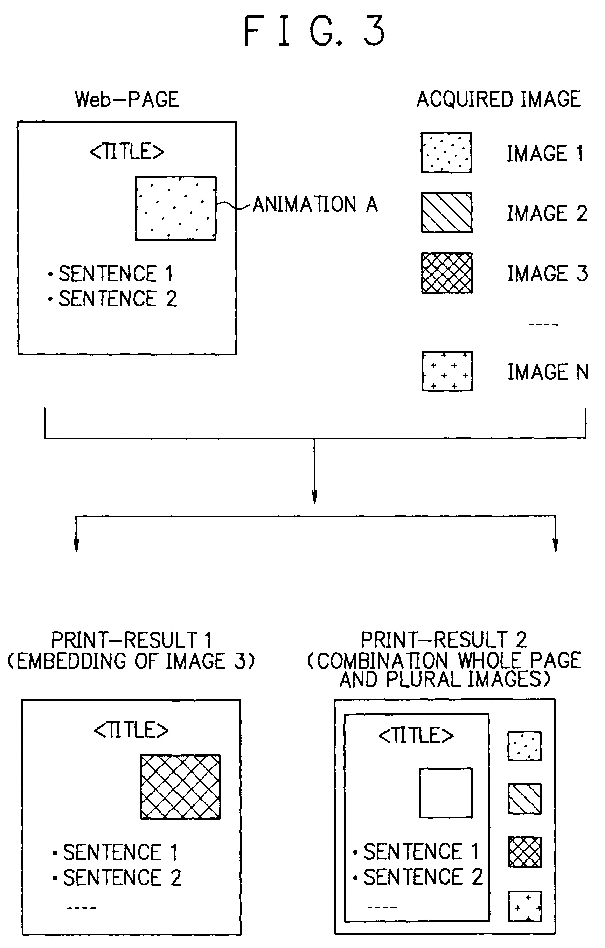

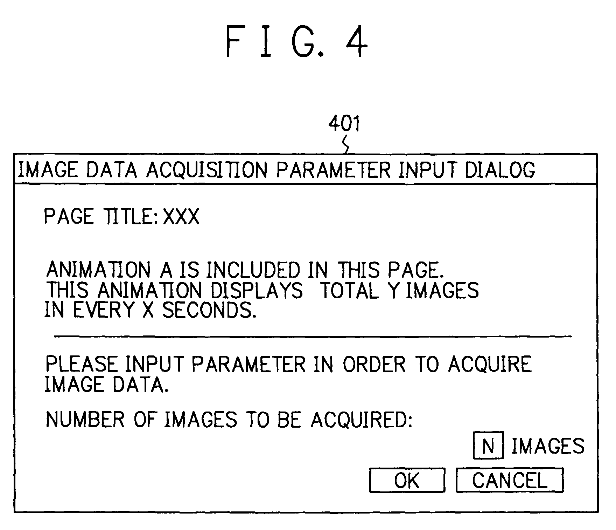

Fig. 3 shows a concrete example of the 'WWW'-browser according to the present invention. Fig. 4 shows one example of an image data acquisition parameter-input picture.

As shown in Web-PAGE of Fig. 3, on the supposition that the 'WWW'-browser 4 intends to print the 'Web'-page 6 using the printer 3, and an animation A is included in an area of the 'Web'-page 6. When the user intends to select the most appropriate still image by himself among the still images constituting the animation as the image data for the sake of output (Y of STEP S104), the image information acquisition means 44 obtains information that the 'Web'-page 6 includes the animation A, and the animation is displayed in such a way that the image data of total "y" pieces in every "x" second is displayed from the interpretation result of the 'HTML'-file 61 according to 'HTML'-file interpretation means 42 and the animation program 62 (STEP S105). The 'WWW'-browser 4 displays the animation information upper half of IMAGE DATA ACQUISITION PARAMETER-INPUT PICTURE 401 shown in Fig. 4, and in the same of lower half of IMAGE DATA ACQUISITION PARAMETER-INPUT PICTURE 401 shown in Fig. 4, there is provided user interface for inputting necessary parameter for the image data acquisition variable establishment means 45. The IMAGE DATA ACQUISITION PARAMETER-INPUT PICTURE 401 is displayed on the CRT-display 2, thus assisting the parameter-input from the user instruction input means 5 according to the user.

Here, when the user inputs numeral value N as ACQUIRING NUMBER OF PIECE OF IMAGE, the value N is established as the image data acquisition variable by the image data acquisition variable establishment means 45 (STEP S106). The 'Web'-page display means 43 causes the image data acquisition means 46 to capture the animation displayed on the CRT-display 2 according to the information acquired by the image information acquisition means 44 and the value N established by the image data acquisition variable establishment means 45, so that as shown in ACQUIRED IMAGE of Fig. 3, it acquires N-pieces of the printing image data; IMAGE "1" to IMAGE "N" (STEP S107). If the image data intended to use for the sake of printing by the user from among these N-pieces of the printing image data is included (STEP S109), the user specifies the image data intended to use for the sake of printing by the user instruction input means 5, thus the printing image data selection means 49 selects the image data intended to use for the sake of printing based on this specification (STEP S110). Further, the user specifies the page layout intended to use for the sake of printing from among plural kinds of page layouts stored in the page layout storage means 410 by the user instruction input means 5, thereby, when the page layout selection means 411 selects the page layout (STEP S111), the printing data preparation means 413 prepares the printing data undergoing layout. This printing data is prepared in accordance with the page layout selected by the page layout selection means 411 based on the image data selected by the printing image data selection means 49 and the page data preserved in the page data preservation means 412.

PRINT-RESULT 1 of Fig. 3 shows the print-result in cases where the image 3 of ACQUIRED IMAGE of Fig. 3 is selected as the printing image data, and 'embedding selected image data in an area where the animation is displayed on the 'Web'-page' is selected as a using page layout.

PRINT-RESULT 2 of Fig. 3 shows result that it selects four image data of images 1, 2, 3, and N as the printing image data, before printing with the layout embedding in 1 page.

### [SECOND EMBODIMENT]

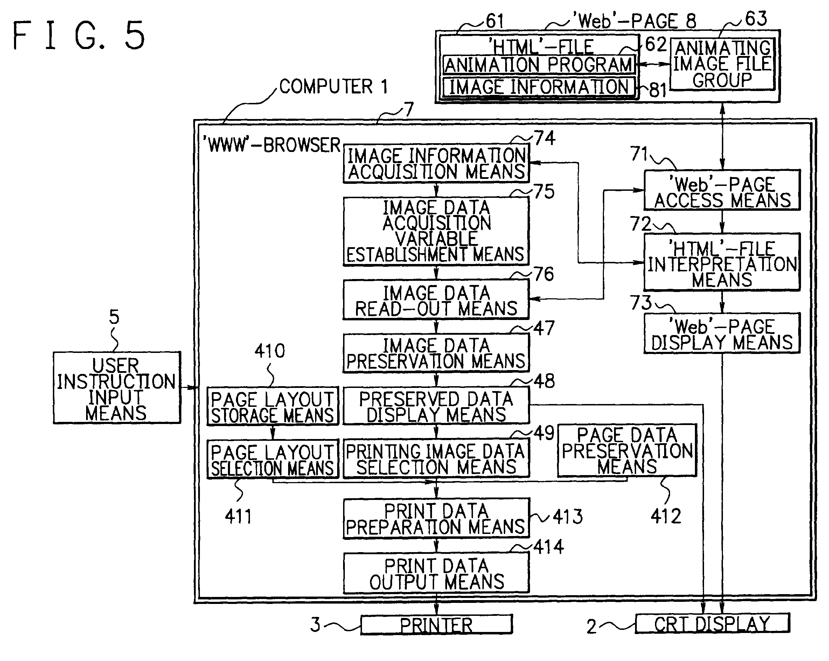

Fig. 5 shows a second embodiment for achieving the 'WWW'-browser according to the present invention. The computer 1 into which a 'WWW'-browser 7 is incorporated is connected to a CRT-display 2, a printer 3, and a user instruction input means 5. The computer 1 is capable of accessing a 'Web'-page 8. The 'Web'-page 8 comprises an 'HTML'-file 61, an animation program 62, an animating image file group 63, and image information 81.

The 'WWW'-browser 7 comprises a 'Web'-page access means 71, an 'HTML' (Hyper Text Markup Language) file interpretation means 72, an 'Web'-page display means 73, an image information acquisition means 74, an image data acquisition variable establishment means 75, an image data read-out means 76, an image data preservation means 47, a preserved data display means 48, a printing image data selection means 49, a page layout storage means 410, a page layout selection means 411, a page data preservation means 412, a printing data preparation means 413, and a printing data output means 414.

Further, the 'WWW'-browser 7 displays the 'Web'-page 8 including an animation on the CRT-display 2, furthermore, implementing printing according to the printer 3. The 'Web'-page 8 is the 'HTML'-file 61 provided with an animation program 62 and an image file information 81, thus the animation program 62 reads-out the image data included in the animating image file group 63 successively so that the animation is displayed on the CRT-display 2. Moreover, in the image information 81, the information such as total number of pieces of the image data, name of image, address and so forth included in the animating image file group 63 are written therein.

The 'Web'-page access means 71 accesses the 'Web'-page 8 on the 'Web' server, before reading therein each of the 'HTML'-file 61 and the animation program 62 included in the 'HTML'-file 61, and the image information 81. The 'HTML'-file interpretation means 72 interprets the 'HTML-file 61, the animation program 62, and the image information 81 read by the 'Web'-page access means 71. The 'Web'-page display means 73 displays the interpretation result on the CRT-display 2 that the 'HTML'-file interpretation means 72 interprets the 'HTML'-file 61 and the animation program 62. On this occasion, the animation program 62 reads to be displayed the image data included in the animating image file group 63 successively, thereby, the animation is displayed on the CRT-display 2.

The image information acquisition means 74 acquires the information that the animation is included in what area about the 'Web'-page 8, and the animation is constituted by how many total pieces of the image data, and names what respective images have and respective addresses thereof and so forth from respective interpretation results according to the 'HTML'-file interpretation means 72 concerning the 'HTML'-file 61, the animation program 62, and the image information 81. The image data acquisition variable establishment means 75 accepts a parameter-input from the user to establish the parameter-input as an image data acquisition variable. The image data read-out means 76 causes the 'Web'-page access means 71 to access the image file on the 'Web' server according to the information acquired by the image information acquisition means 74 and the value established by the image data acquisition variable establishment means 75 to acquire the printing image data. The image data preservation means 77 preserves the image data acquired by the image data read-out means 76 temporarily.

The preserved data display means 48, when the image data acquisition means 46 acquires to be completed the whole image data, displays the image data which is preserved in the image data preservation means 47 on the CRT-display 2. The printing image data selection means 49 selects the image data used for the printing among the image data displayed by the preserved data display means 48 in accordance with input of the user.

The page data preservation means 412 preserves page data for the sake of printing, which is generated in such a way that the 'HTML'-file interpretation means 42 interprets the whole of the 'Web'-page 6. The page layout storage means 410 stores therein plural kinds of page layouts for performing layout of the image data selected by the printing image data selection means 49 and page data preserved in the page data preservation means 412. The page layout selection means 411 selects a layout used for the printing among the plural kinds of the page layouts stored in the page layout storage means 410 in accordance with the input content of the user.

The printing data preparation means 413 prepares the printing data which is obtained in such a way that the image data selected by the printing image data selection means 49 and the page data preserved by the page data preservation means 412 are performed layout in accordance with the page layout selected by the page layout selection means 411. The printing data output means 414 sends the printing data prepared by the printing data preparation means 413 to the printer 3.

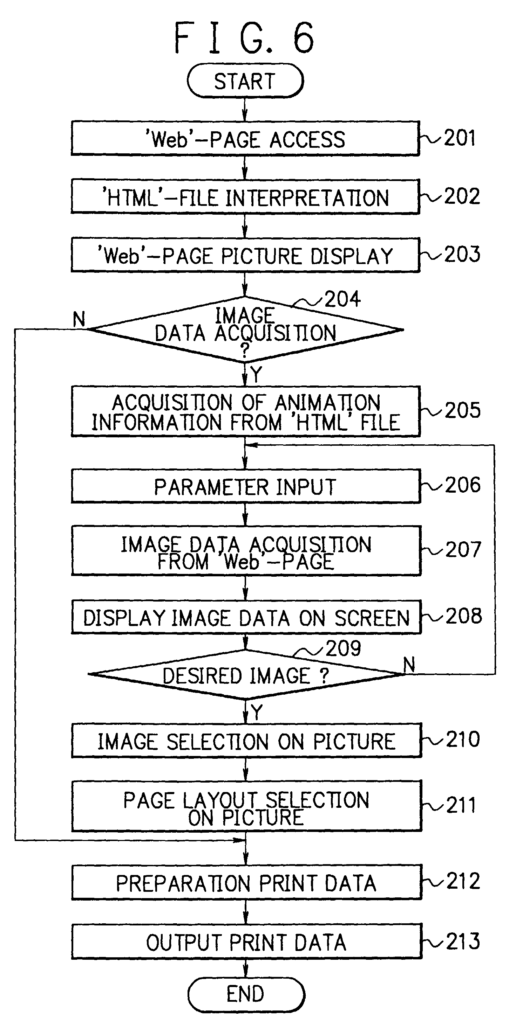

Fig. 6 is a flowchart for explaining operation of the second embodiment of the present invention.

Firstly, when the 'WWW'-browser 7 on the computer 1 displays the 'Web'-page 8 on the CRT-display 2, it inputs the address of the 'Web'-page 8 to the 'WWW'-browser 7 from the user instruction input means 5. The 'Web'-page access means 71 accesses the 'Web'-page 8 on the 'Web' server using this address (STEP S201), before reading therein the 'HTML'-file 61 constituting the 'Web'-page 8 and the animation program 62 included therein, and the image information 81. The 'HTML'-file interpretation means 72 interprets the 'HTML'-file 61 and the animation program 62 which are read therein (STEP S202), before the 'Web'-page display means 73 displays it on the CRT-display 2 (STEP S203). On this occasion, the animation program 62 causes the image data included in the animating image file group 63 to be read successively in order to display, so that the animation is displayed on the CRT-display 2.

When the user selects the most appropriate one of the still images constituting the animation as the image data for the sake of output, on the occasion that the user prints the 'Web'-page 8 including the animation by the printer 3 (STEP S204), the image information acquisition means 74 acquires the information that the animation is included in what area of the 'Web'-page 8, and that the animation is constituted from how many total pieces of image data, respective image name, and what the address mean from the interpretation result of the 'HTML-file 61, the animation program 62, and the image information 81 according to the 'HTML-file interpretation means 72 (STEP S205).

Next, the image data acquisition variable establishment means 75 establishes a parameter inputted from the user instruction input means 5 according to the user as an image data acquisition variable (STEP S206). The image data read-out means 76 causes the 'Web'-page access means 71 to access the image file on the 'Web'-server based on the information acquired by the image information acquisition means 74 and the value established to the image data acquisition variable establishment means 75. According to this step, the printing image data is acquired (STEP S207). This acquired image data is preserved in the image data preservation means 47 temporarily.

When the image data read-out means 76 acquires to be completed the whole image data, the preserved data display means 48 displays the image data preserved in the image data preservation means 47 on the CRT-display 2 (STEP S208). When the image data intended to use for the sake of printing by the user is not included within the display content (N of STEP S209), it implements input of the parameter again to the image data acquisition variable establishment means 75 of STEP S206. When there exists the image data which the user intends to use for the sake of printing within content of display (Y of STEP S209), the user instruction input means 5 specifies the image data intended to use for the sake of printing, thus the printing image data selection means 49 selects the image data according to this specification (STEP S210).

On the other hand, the page data preservation means 412 preserves the page data for printing the whole 'Web'-page 8 which is generated by the 'HTML'-file interpretation means 72. Further, the page layout storage means 410 stores therein the image data selected by the printing image data selection means 49 and the plural kinds of page layouts in order to perform layout the page data preserved in the page data preservation means 412. These stored page layouts are displayed on the CRT-display 2. The user instructs the page layout intended to use for the sake of printing from among a plurality of the page layouts by the user instruction input means 5. The page layout selection means 411 selects the page layout in accordance with the operation (STEP S211). The printing data preparation means 413 prepares the printing data based on each of the image data selected by the printing image data selection means 49, the page data preserved by the page data preservation means 412, and the page layout selected by the page layout selection means 411 (STEP S212). Further, the printing data according to the printing data preparation means is sent to the printer 3 by the printing data output means 414 (STEP S213), thus printing by the printer 3 is implemented.

Furthermore, when the user prints the 'Web'-page 8 including the animation by the printer 3, the 'WWW'-browser 7 prepares the printing data while selecting the image data for the sake of output and the page Layout according to the appropriate rule if the judgement is done that it is not necessary to select the image data for the sake of output by the user himself in STEP S204 (STEP S212). This printing data is sent to the printer 3 by the printing data output means 414 (STEP S213), thus the printing by the printer 3 is executed.

In the above-described second embodiment, the image data read-out means 76 causes the 'Web'-page access means 71 to access the image file on the 'Web'-server based on the information acquired by the image information acquisition means 74 and the value established in the image data acquisition variable establishment means 75 so as to acquire the printing image data. The printing image data selection means 49 selects the image data intended to use for the sake of the printing from among the printing image data, so that the user can select freely still image using for the sake of the printing from among the still images constituting the animation.

Further, in the present embodiment, the page layout selection means 411 is capable of selecting the page layout intended to use for the sake of the printing from among page layouts stored in the page layout storage means 410, therefore, it is capable of executing layout freely the image data and the page data which the user selects on the picture.

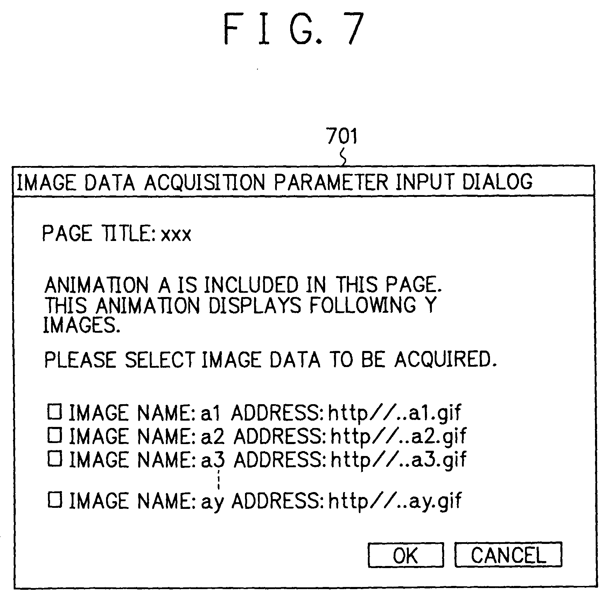

Next, there will be described operation of the second embodiment referring to 'Web'-page shown in Fig. 3. Here, Fig. 7 shows one example of parameter-input picture for acquiring image data in the present embodiment.

As shown in "Web-PAGE" of Fig. 3, on the supposition that the 'WWW'-browser 7 intends to print the 'Web'-page 8 using the printer 3, and an animation "A" is included in the right-hand area of the 'Web'-page 8. When the user intends to select the most appropriate still image by himself from among the still images constituting the animation as the image data for the sake of output (Y of STEP S204), the image information acquisition means 74 acquires information that the 'Web'-page 8 includes the animation "A", and the animation is displayed in such a way that the image data of total "y" pieces is displayed and respective image names and addresses are xxxx, from the interpretation result of the 'HTML'-file 61, the animation program 62, and the image information 81 according to 'HTML-file interpretation means 72 (STEP S205). The 'WWW'-browser 7 displays the information of "IMAGE DATA ACQUISITION PARAMETER-INPUT PICTURE" 701 shown in Fig. 7, and within the same of "IMAGE DATA ACQUISITION PARAMETER-INPUT PICTURE" 701 shown in Fig. 7, there is provided user interface for inputting necessary parameter for the image data acquisition variable establishment means 75. The "IMAGE DATA ACQUISITION PARAMETER-INPUT PICTURE" 701 is displayed on the CRT-display 2, thus assisting the parameter-input from the user instruction input means 5 according to the user.

Here, when the user selects "N" pieces of the image data as "ACQUIRING IMAGE DATA", the value "N", image name and address are established as the image data acquisition variable by the image data acquisition variable establishment means 75 (STEP S206). The image data read-out means 76 causes the 'Web'-page access means 71 to be driven to access the image file on the 'Web'-server according to the information acquired by the image information acquisition means 74 and the value established by the image data acquisition variable establishment means 75, so that as shown in "ACQUIRED IMAGE" of Fig. 3, thus acquiring "N"-pieces of the printing image data; "IMAGE 1" to "IMAGE N" as shown in Fig. 3 (STEP S207). If the image data intended to use for the sake of printing by the user from among these N-pieces of the printing image data is included (Y of STEP S209), the user specifies the image data intended to use for the sake of printing using the user instruction input means 5. Thus, the printing image data selection means 49 selects the image data intended to use for the sake of the printing based on this specification (STEP S210). Further, the user specifies the page layout intended to use for the sake of the printing from among plural kinds of page layouts stored in the page layout storage means 410 by the user instruction input means 5, thereby, the page layout selection means 411 selects the page layout (STEP S211).

Subsequently, the printing data preparation means 413 prepares the printing data undergoing layout. This printing data is prepared in accordance with the page layout selected by the page layout selection means 411 based on the image data selected by the printing image data selection means 49 and the page data preserved in the page data preservation means 412 (STEP S212). This printing data is sent to the printer 3 by the printing data output means 414 (STEP S213), thus, the printing by the printer 3 is implemented. The "PRINT-RESULT 1" of Fig. 3 shows the layout that it causes the image 3 to be selected as the printing image data, before causing this image data selected as the page layout to use for the sake of the printing to be embedded within area on which the animation is displayed on the 'Web'-page. The "PRINT-RESULT 2" of Fig. 3 shows printing result that it selects a plurality of image data of "IMAGE 1" to "IMAGE N" as the printing image data, and the layout including content of arranging the whole page and a plurality of image data within 1 page.

### [THIRD EMBODIMENT]

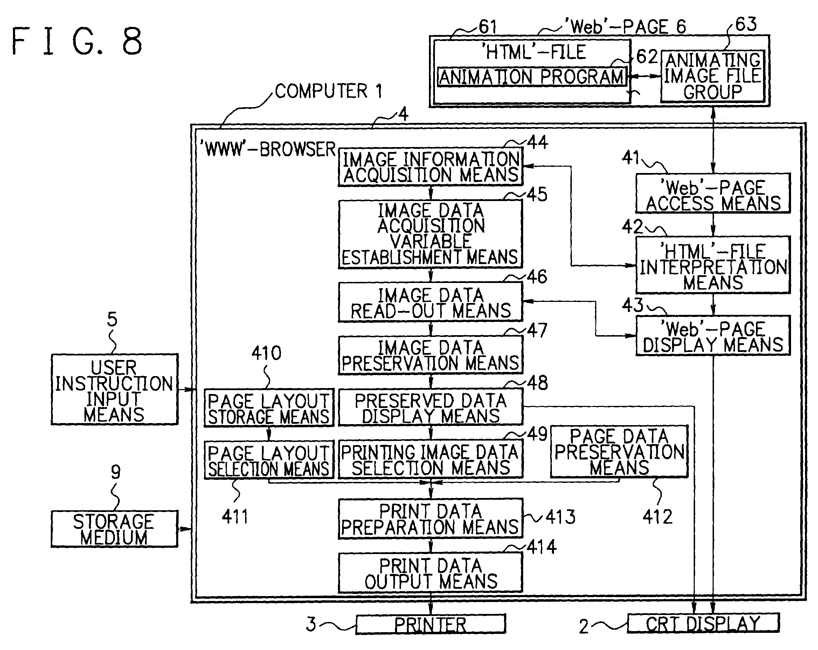

Fig. 8 shows a third embodiment of system for achieving a 'WWW'-browser according to the present invention. As shown in Fig. 8, a computer 1 into which a 'WWW'-browser 4 is incorporated operates by virtue of CPU. The computer 1 is connected to a CRT-display 2 as a display device, a printer 3 as an output device, a user instruction input means 5, and a storage medium 9. Firstly, a program of the 'WWW'-browser is read by the computer 1. A keyboard, a mouse, and so forth are used as the user instruction input means 5. The user inputs instruction or data to the 'WWW'-browser 4 by the user instruction input means 5. The inputted instructions or data are processed by the 'WWW'-browser resulting in choices or execution result in respective processes. The content thereof is displayed on the CRT-display 2 to assist the user. The third embodiment is characterized in that there is provided the storage medium 9 stored therein the program of the 'WWW'-browser 4. As this storage medium 9, magnetic storage medium such as magnetic disk, semiconductor memory, or another storage medium are capable of being used.

First of all, the program of the 'WWW'-browser 4 is read-in the computer 1 from the storage medium 9 to control operation of the computer 1 described as above. The computer 1 executes a series of processing in accordance with control of the 'WWW'-browser program according to the computer 1.

The computer 1 is capable of accessing a 'Web'-page 6 using 'WWW'-browser 4. The 'WWW'-browser 4 comprises a 'Web'-page access means, an 'HTML' (Hyper Text Markup Language) file interpretation means 42, an 'Web'-page display means 43, an image information acquisition means 44, an image data acquisition variable establishment means 45, an image data acquisition means 46, an image data preservation means 47, a preserved data display means 48, a printing image data selection means 49, a page layout storage means 410, a page layout selection means 411, a page data preservation means 412, a printing data preparation means 413, and a printing data output means 414. Further, the 'Web'-page 6 comprises an 'HTML'-file 61, an animation program 62, and an animating image file group 63.

Here, there will be described operation (Function) of the 'WWW'-browser 4. The 'WWW'-browser 4 displays the 'Web'-page 6 including animation to the CRT-display 2 as an image. Also the 'WWW'-browser 4 has a function for printing the 'Web'-page 6 including animation to a space using the printer 3. The 'Web'-page 6 is the 'HTML'-film 61 including the animation program 62. The animation program 62 causes the image data included in the animating image file group 63 to be read out therefrom successively to display to the CRT-display 2. The user can observe the animation according to the animation program 62 by the picture.

The 'Web'-page access means 41 accesses the 'Web'-page 6 on the 'Web' server, and has a function for reading the 'HTML'-file 61 and animation program 62 included therein. The 'HTML'-file interpretation means 42 interprets the 'HTML'-file 61 read by the 'Web'-page access means 41 and the animation program 62. The 'Web'-page display means 43 displays the interpreted result which is obtained in such a way that the 'HTML'-file interpretation means 42 interprets the 'HTML'-file 61 and the animation program 62. On this occasion, the animation program 62 causes the image data included in the animating image file group 63 to be read successively to be displayed, therefore, the animation is displayed on the CRT-display 2.

The image information acquisition means 44 acquires information about the animation from the interpretation result of the 'HTML'-file 61 due to the 'HTML'-file interpretation means 42 and the animation program 62. Namely, the image information acquisition means 44 obtains information that the animation is included in what area of the 'Web'-page 6, and that display is implemented as the animation while displaying how many total pieces of image data in every how many of second. The image data acquisition variable establishment means 45 which receives therein parameter-input from the user, establishes the parameter-input as the image data acquisition variable. The image data acquisition means 46 causes the 'Web'-page display means 43 to capture the animation displayed on the CRT-display 2 according to information acquired by the image information acquisition means 44, and a value established by the image data acquisition variable establishment means 45 to acquire printing image data.

The image data preservation means 47 preserves the image data which the image data acquisition means 46 acquires temporarily. The preserved data display means 48, when the image data acquisition means 46 acquires to be completed the whole image data, displays the image data which is preserved in the image data preservation means 47 on the CRT-display 2. The printing image data selection means 49 selects the image data used for the printing among the image data displayed by the preserved data display means 48 in accordance with input of the user.

The page data preservation means 412 preserves page data for the sake of printing, which is generated in such a way that the 'HTML'-file interpretation means 42 interprets the whole of the 'Web'-page 6. The page layout storage means 410 stores therein plural kinds of page layouts for performing layout of the image data selected by the printing image data selection means 49 and page data preserved in the page data preservation means 412. The page layout selection means 411 selects a layout used for the printing among the plural kinds of the page layouts stored in the page layout storage means 410 in accordance with the input content of the user.

The printing data preparation means 413 prepares the printing data which is obtained in such a way that the image data selected by the printing image data selection means 49 and the page data preserved by the page data preservation means 412 are performed layout in accordance with the page layout selected by the page layout selection means 411. The printing data output means 414 sends the printing data prepared by the printing data preparation means 413 to the printer 3.

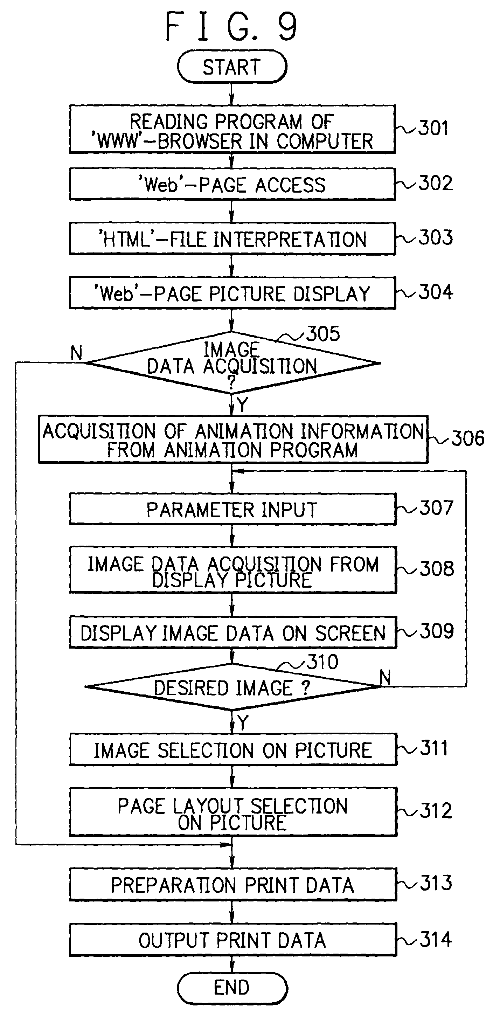

Next, there will be described operation of the third embodiment referring to configuration of Fig. 8, and flowchart of Fig. 9.

Firstly, when the 'WWW'-browser on the computer 1 causes the 'Web'-page 6 to be displayed on the CRT-display 2, the user causes the program of the 'WWW'-browser to be read to the computer 1 (STEP S301). Subsequently, the user inputs an address of the 'Web'-page 6 to the 'WWW'-browser 4 using the user instruction input means 5. The 'Web'-page access means 41 accesses the 'Web'-page 6 on the 'Web' server using this address (STEP S302), before implementing read-in of the 'HTML'-file 61 constituting the 'Web'-page 6 and the animation program 62 included therein. The 'HTML-file 61 and the animation program 62 which are read are interpreted by the 'HTML-file interpretation means 42 (STEP S303), before being displayed on the CRT-display 2 by the 'Web'-page display means 43 (STEP S304). On this occasion, the animation program 62 reads to be displayed the image data included in the animating image file group 63 successively, so that the animation is displayed on the CRT-display 2.

Here, when the user prints the 'Web'-page 6 using the printer 3, the user intends to select the most appropriate one among the still images constituting the animation by himself as outputting image data (STEP S305). On this occasion, the image information acquisition means 44 obtains information that the animation is included in what area of the 'Web'-page 6, and that display is implemented as the animation while displaying how many total pieces of image data in every how many of second from the interpretation result of the 'HTML'-file 61 according to the 'HTML'-file interpretation means 61 and the animation program 62 (STEP S306).

Next, the image data acquisition variable establishment means 45 receives parameter-input from the user instruction input means 5 according to the user, before establishing as an image data acquisition variable (STEP S307). The 'Web'-page display means 43 causes the image data acquisition means 46 to capture the animation displayed on the CRT-display 2 according to the information acquired by the image information acquisition means 44 and value established by the image data acquisition variable establishment means, thereby the printing image data is acquired (STEP S308). The image data which is acquired is preserved in the image data preservation means 47 temporarily.

When the image data acquisition means 46 acquires to be completed the whole image data, the image data preserved in the image data preservation means 47 is displayed on the CRT-display 2 by the preserved data display means 48 (STEP S309). When if the image data which the user intends to print is not included among the image data (N of STEP S310), the user does over again input of parameter to the image data acquisition variable establishment means 45 of STEP S307. On the other hand, when the image data which the user intends to print is included (Y of STEP S310), the user specifies the image data intended to use for the sake of printing. The printing image data selection means 49 selects the image data specified in answer to this specification (STEP S311).

Further, the page data preservation means 412 preserves therein the page data for printing the whole of the 'Web'-page 6 generated by the 'HTML'-file interpretation means 42, and the page layout storage means 410 stores therein the image data selected by the printing image data selection means 49 and plural kinds of page layouts for performing layout of the page data preserved in the page data preservation means 412. These page layouts are displayed on the CRT-display 2. The user observes these layouts, before specifying the page layout intended printing by the user instruction input means 5, thus the page layout selection means 411 selects the specified page layout (STEP S312). As a result thereof, the printing data preparation means 413 prepares printing data undergoing layout on the image data selected by the printing image data selection means 49, and on the page data preserved in the page data preservation means 412 in accordance with the page layout selected by the page layout selection means 411 (STEP S313), before the printing data is sent to the printer 3 by the printing data output means 414 (STEP S314), thus printing is implemented.

Furthermore, when it is not necessary to select the image data for the sake of output by the user himself on the occasion that the user prints the 'Web'-page 6 including the animation with the printer 3 (STEP S305), the 'WWW'-browser 4 selects the image data for the sake of output and the page layout according to appropriate rules to prepare printing data (STEP S313), subsequently, the printing data is sent to the printer 3 by the printing data output means (STEP S314), thus printing is implemented.

As described-above, in the third embodiment of the present invention, the 'Web'-page display means causes the image data acquisition means 46 to capture the animation displayed on the CRT-display 2 to acquire the printing image data according to the information acquired by the image information acquisition means 44 and the value established by the image data acquisition variable establishment means 45. The printing image data selection means 49 selects the image data intended to print from among them. For that reason, the user can select freely an appropriate one for use in printing from the still images constituting the animation.

Further, in the present third embodiment, the page layout selection means 411 selects the page layout intended to print from among the page layout stored in the page layout storage means 410, therefore, can perform layout freely the image data selected by the user together with the page data selected by the page layout selection means 411.

### [FOURTH EMBODIMENT]

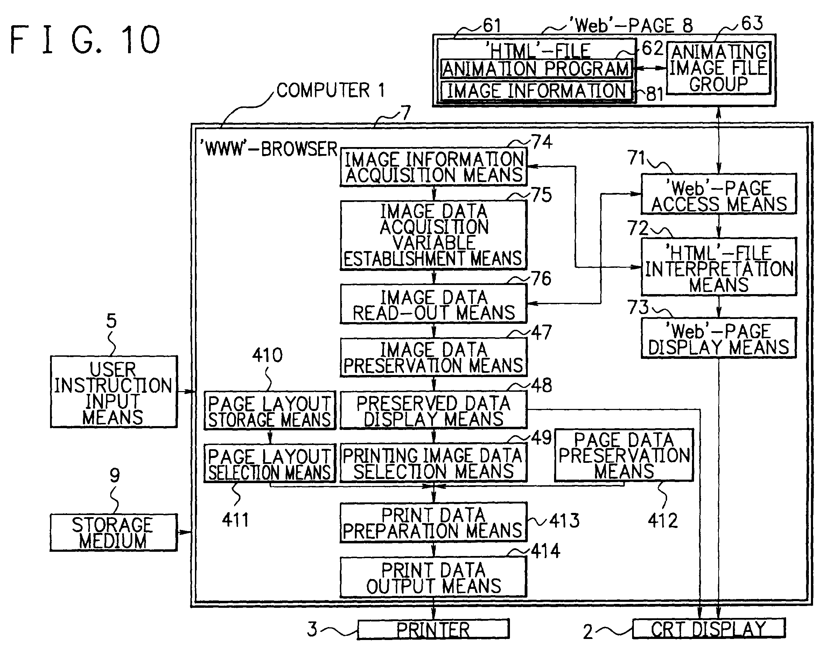

Fig. 10 shows the fourth embodiment of system for achieving the 'WWW'-browser according to the present invention. The computer 1 into which a 'WWW'-browser 7 is incorporated is connected to a CRT-display 2, a printer 3, a user instruction input means 5, and a storage medium 9.

First of all, a program of the 'WWW'-browser is read by the computer 1, the program of the 'WWW'-browser 4 is read-in the computer 1 from the storage medium 9 to control operation of the computer 1 described as above. The computer 1 executes a series of processing in accordance with control of the 'WWW'-browser program according to the computer 1.

The computer 1 is capable of accessing a 'Web'-page 8. The 'Web'-page 8 comprises an 'HTML'-file 61, an animation program 62, an animating image file group 63, and image information 81.

The 'WWW'-browser 7 comprises a 'Web'-page access means 71, an 'HTML' (Hyper Text Markup Language) file interpretation means 72, an 'Web'-page display means 73, an image information acquisition means 74, an image data acquisition variable establishment means 75, an image data read-out means 76, an image data preservation means 47, a preserved data display means 48, a printing image data selection means 49, a page layout storage means 410, a page layout selection means 411, a page data preservation means 412, a printing data preparation means 413, and a printing data output means 414.

Further, the 'WWW'-browser 7 displays the 'Web'-page 8 including an animation on the CRT-display 2, Furthermore, implementing printing according to the printer 3. The 'Web'-page 8 is the 'HTML'-file 61 provided with an animation program 62 and image file information 81, thus the animation program 62 reads-out the image data included in the animating image file group 63 successively so that the animation is displayed on the CRT-display 2. Moreover, in the image information 81, the information such as total number of pieces of the image data, name of image, address and so forth included in the animating image file group 63 are written therein.

The 'Web'-page access means 71 accesses the 'Web'-page 8 on the 'Web' server, before reading-in each of the 'HTML'-file 61 and the animation program 62 included in the 'HTML'-file 61, and the image information 81. The 'HTML'-file interpretation means 72 interprets the 'HTML'-file 61, the animation program 62, and the image information 81 read by the 'Web'-page access means 71. The 'Web'-page display means 73 displays the result on the CRT-display 2 that the 'HTML'-file interpretation means 72 interprets the 'HTML'-file 61 and the animation program 62. On this occasion, the animation program 62 reads to be displayed the image data included in the animating image file group 63 successively, thereby, the animation is displayed on the CRT-display 2.

The image information acquisition means 74 acquires the information that the animation is included in what area about the 'Web'-page 8, and the animation is constituted by how many total pieces of the image data, and names what respective images have and respective addresses thereof and so forth from respective interpretation results according to the 'HTML'-file interpretation means 72 concerning the 'HTML'-file 61, the animation program 62, and the image information 81. The image data acquisition variable establishment means 75 accepts a parameter-input from the user to establish the parameter-input as an image data acquisition variable. The image data read-out means 76 causes the 'Web'-page access means 71 to access the image file on the 'Web' server according to the information acquired by the image information acquisition means 74 and the value established by the image data acquisition variable establishment means 75 to acquire the printing image data. The image data preservation means 77 preserves the image data acquired by the image data read-out means 76 temporarily.

The preserved data display means 48, when the image data acquisition means 46 acquires to be completed the whole image data, displays the image data which is preserved in the image data preservation means 47 on the CRT-display 2. The printing image data selection means 49 selects the image data used for the printing among the image data displayed by the preserved data display means 48 in accordance with input of the user.

The page data preservation means 412 preserves page data for the sake of printing, which is generated in such a way that the 'HTML'-file interpretation means 42 interprets the whole of the 'Web'-page 6. The page layout storage means 410 stores therein plural kinds of page layouts for performing layout of the image data selected by the printing image data selection means 49 and page data preserved in the page data preservation means 412. The page layout selection means 411 selects a layout used for the printing among the plural kinds of the page layouts stored in the page layout storage means 410 in accordance with the input content of the user.

The printing data preparation means 413 prepares the printing data which is obtained in such a way that the image data selected by the printing image data selection means 49 and the page data preserved by the page data preservation means 412 are performed layout in accordance with the page layout selected by the page layout selection means 411. The printing data output means 414 sends the printing data prepared by the printing data preparation means 413 to the printer 3.

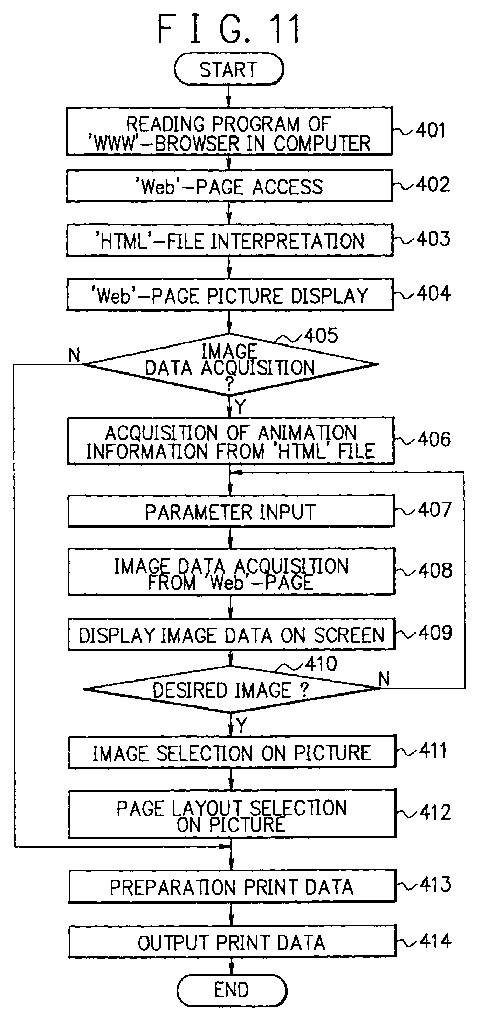

Fig. 11 is a flowchart for explaining operation of the fourth embodiment of the present invention.

Firstly, when the 'WWW'-browser on the computer 1 causes the 'Web'-page 7 to be displayed on the CRT-display 2, the user causes the program of the 'WWW'-browser to be read to the computer 1 from the storage device 9 (STEP S401). It inputs the address of the 'Web'-page 8 to the 'WWW'-browser 7 from the user instruction input means 5. The 'Web'-page access means 71 accesses the 'Web'-page 8 on the 'Web' server using this address (STEP S402), before reading-in the 'HTML'-file 61 constituting the 'Web'-page 8 and the animation program 62 included therein, and the image information 81. The 'HTML'-file interpretation means 72 interprets the 'HTML'-file 61 and the animation program 62 which are read (STEP S403), before the 'Web'-page display means 73 displays on the CRT-display 2 (STEP S404). On this occasion, the animation program 62 causes the image data included in the animating image file group 63 to be read successively in order to display, so that the animation is displayed on the CRT-display 2.

When the user selects the most appropriate one of the still images constituting the animation as the image data for the sake of output, on the occasion that the user prints the 'Web'-page 8 including the animation by the printer 3 (STEP S405), the image information acquisition means 74 acquires the information that the animation is included in what area of the 'Web'-page 8, and that the animation is constituted from how many total pieces of image data, respective image name, and what the address mean from the interpretation result of the 'HTML'-file 61, the animation program 62, and the image information 81 according to the 'HTML'-file interpretation means 72 (STEP S406).

Next, the image data acquisition variable establishment means 75 establishes a parameter-inputted from the user instruction input means 5 according to the user as an image data acquisition variable (STEP S407). The image data read-out means 76 causes the 'Web'-page access means 71 to access the image file on the 'Web'-server based on the information acquired by the image information acquisition means 74 and the value established to the image data acquisition variable establishment means 75. According to this step, the printing image data is acquired (STEP S408). This acquired image data is preserved in the image data preservation means 47 temporarily.

When the image data read-out means 76 acquires to be completed the whole image data, the preserved data display means 48 displays the image data preserved in the image data preservation means 47 on the CRT-display 2 (STEP S409). When the image data intended to use for the sake of printing by the user is not included within the display content (N of STEP S410), it implements input of the parameter again to the image data acquisition variable establishment means 75 of STEP S407. When there exists the image data which the user intends to use for the sake of printing within content of display (Y of STEP S410), the user instruction input means 5 specifies the image data intended to use for the sake of printing, thus the printing image data selection means 49 selects the image data according to this specification (STEP S411).

On the other hand, the page data preservation means 412 preserves the page data for printing the whole 'Web'-page 8 generated by the 'HTML'-file interpretation means 72. Further, the page layout storage means 410 stores therein the image data selected by the printing image data selection means 49 and the plural kinds of page layouts in order to perform layout the page data preserved in the page data preservation means 412. These stored page layouts are displayed on the CRT-display 2. The user instructs the page layout intended to use for the sake of printing from among a plurality of the page layouts by the user instruction input means 5. The page layout selection means 411 selects the page layout in accordance with the operation (STEP S412). The printing data preparation means 413 prepares the printing data based on each of the image data selected by the printing image data selection means 49, the page data preserved by the page data preservation means 412, and the page layout selected by the page layout selection means 411 (STEP S413). Further, the printing data according to the printing data preparation means is sent to the printer 3 by the printing data output means 414 (STEP S414), thus printing by the printer 3 is implemented.

Furthermore, when the user prints the 'Web'-page 8 including the animation by the printer 3, the 'WWW'-browser 7 prepares the printing data while selecting the image data for the sake of output and the page layout according to the appropriate rule if the judgement is done that it is not necessary to select the image data for the sake of output by the user himself in STEP S405 (STEP S413). This printing data is sent to the printer 3 by the printing data output means 414 (STEP S414), thus the printing by the printer 3 is executed.

In the above-described fourth embodiment, the image data read-out means 76 causes the 'Web'-page access means 71 to access the image file on the 'Web'-server based on the information acquired by the image information acquisition means 74 and the value established in the image data acquisition variable establishment means 75 so as to acquire the printing image data. The printing image data selection means 49 selects the image data intended to use for the sake of the printing from among the printing image data, so that the user can select freely still image using for the sake of the printing from among the still images constituting the animation.

Further, in the present embodiment, the page layout selection means 411 is capable of selecting the page layout intended to use for the sake of the printing from among page layouts stored in the page layout storage means 410, therefore, it is capable of implementing layout freely the image data and the page data which the user selects on the picture.

As described-above, according to the present invention, there is acquired a plurality of image data based on the information about the animation within the 'Web'-page acquired by the image information acquisition means and the value established by the image data acquisition establishment means, and it is capable of selecting image data from among the plurality of image data by the printing image data selection means. The user can select appropriate image data freely from among the still images constituting the animation as the image data used at the time of the output on the occasion that it prints 'Web'-page including the animation.

Further, the 'WWW'-browser stores therein plural kinds of page layouts, and selects the layout to use for the sake of the printing from among the plural kinds of page layouts by the page layout selection means, thus causing the image data selected by the printing image data selection means to be layout in accordance with the page layout selected by the page layout selection means in order to prepare the printing data, therefore, it is capable of selecting freely the layout on the occasion that it prints the 'Web'-page including the animation.

While preferred embodiments of the invention have been described using specific terms, such description is for illustrative purpose only, and it is to be understood that changes and variations may be made without departing from the spirit or scope of the following claims.

## Claims

1. A 'WWW' (World Wide Web)-browser (4) which is to access an 'Web'-page (6) to be Hyper Text Markup Language file (61) (hereinafter referred to as 'HTML'-file) including an animation program (62) and which outputs a still image constituting an animation on an 'Web'-page (6), comprising:
an 'HTML'-file interpretation means (42) for interpreting contents of said 'HTML'-file (61) and said animation program (62);
an image information acquisition means (44) for acquiring information concerning an animation within said 'Web'-page (6) according to an interpretation result of said 'HTML'-file interpretation means (42);
an image data acquisition variable establishment means (45) for establishing a parameter inputted as an image data acquisition variable;
an image data acquisition means (46) for capturing an animation displayed on a display device (2) based on information acquired by said image information acquisition means (44) and an establishment value of said image data acquisition variable establishment means (45); and
a printing image data selection means (49) for selecting image data in order to use for the sake of printing from among image data captured by said image data acquisition means (46).

2. A 'WWW'-browser (4) which is to access an 'Web'-page (6) to be 'HTML'-file (61) including an animation program (62) and which outputs a still image constituting an animation on an 'Web'-page (6), comprising:
an 'HTML'-file interpretation means (42) for interpreting contents of said 'HTML'-file (61) and said animation program (62),
an image information acquisition means (44) for acquiring information concerning an animation within said 'Web'-page (6) according to interpretation result of said 'HTML'-file interpretation means (42);
an image data acquisition variable establishment means (45) for establishing a parameter inputted as an image data acquisition variable;
an image data acquisition means (46) for capturing an animation displayed on a display device (2) based on the information acquired by said image information acquisition means (44) and an establishment value of said image data acquisition variable establishment means (45);
a printing image data selection means (49) for selecting image data to use for the sake of printing from among the image data captured by said image data acquisition means (46);
a page layout storage means (410) for storing therein plural kinds of page layouts;
a page layout selection means (411) for selecting a layout using for the sake of printing from among said plural kinds of page layouts stored in said page layout storage means (410); and
a printing data preparation means (413) for preparing printing data that the image data selected by said printing image data selection means (49) is subjected to layout in accordance with a page layout selected by said page layout selection means (411).

3. A 'WWW'-browser (7) which is to access an 'Web'-page (8) to be 'HTML'-file (61) including an animation program (62) and which outputs a still image constituting an animation on an 'Web'-page (8), comprising:
an 'HTML'-file interpretation means (72) for interpreting respective contents of said 'HTML'-file (61), said animation program (62), and said image information (81);
an image information acquisition means (74) for acquiring information concerning an animation within said 'Web'-page (8) based on interpretation result according to said 'HTML'-file interpretation means (72);
an image data acquisition variable establishment means (75) for establishing a parameter inputted as an image data acquisition variable;
an image data read-out means (76) for acquiring image data in such a way that said image data read-out means causes image file on an 'Web'-server to access based on information acquired by said image information acquisition means (74) and a value established by said image data acquisition variable establishment means (75); and
a printing image data selection means (49) for selecting image data to use for the sake of printing from among image data read from said image data read-out means (76).

4. A 'WWW'-browser (7) which is to access an 'Web'-page (8) to be 'HTML'-file (61) including an animation program (62) and which outputs a still image constituting an animation on an 'Web'-page (8), comprising:
an 'HTML'-file interpretation means (72) for interpreting respective contents of said 'HTML'-file (61), said animation program (62), and said image information (81);
an image information acquisition means (74) for acquiring information concerning an animation within said 'Web'-page (8) based on interpretation result according to said 'HTML'-file interpretation means (72);
an image data acquisition variable establishment means (75) for establishing a parameter inputted as an image data acquisition variable;
an image data read-out means (76) for acquiring image data in such a way that said image data read-out means causes image file on an 'Web'-server to access based on information acquired by said image information acquisition means (74) and a value established by said image data acquisition variable establishment means (75);
a printing image data selection means (49) for selecting image data using for the sake of printing from among image data read from said image data read-out means (76);
a page layout storage means (410) for storing therein plural kinds of page layouts;
a page layout selection means (411) for selecting layout using for the sake of printing from among said plural kinds of page layouts stored in said page layout storage means (410); and
a printing data preparation means (413) for preparing printing data that the image data selected by said printing image data selection means (49) is subjected to layout in accordance with a page layout selected by said page layout selection means (411).

5. A storage medium storing therein a program of a 'WWW'-browser (4) for accessing an 'Web'-page (6) to be an 'HTML'-file (61) including an animation program (62), for causing a computer (1) to execute the following processing of:
a 'HTML'-file interpretation processing for interpreting contents of said 'HTML'-file (61) and said animation program (62);
an image information acquisition processing for acquiring information concerning an animation within said 'Web'-page (6) according to interpretation result of said 'HTML'-file interpretation processing;
an image data acquisition variable establishment processing for establishing a parameter inputted as an image data acquisition variable;
an image data acquisition processing for capturing an animation displayed on a display device (2) based on information acquired by said image information acquisition processing and an establishment value of said image data acquisition variable establishment processing; and
a printing image data selection processing for selecting image data using for the sake of printing from among the image data captured by said image data acquisition processing.

6. A storage medium storing therein a program of a 'WWW'-browser (4) for accessing an 'Web-page (6) to be an 'HTML'-file (61) including an animation program (62), for causing a computer (1) to execute the following processing of:
an 'HTML'-file interpretation processing for interpreting contents of said 'HTML'-file (61) and said animation program (62);
an image information acquisition processing for acquiring information concerning an animation within said 'Web'-page (62) according to interpretation result of said 'HTML'-file interpretation processing;
an image data acquisition variable establishment processing for establishing a parameter inputted as an image data acquisition variable;
an image data acquisition processing for capturing an animation displayed on a display device (2) based on information acquired by said image information acquisition processing and an establishment value of said image data acquisition variable establishment processing; and
an printing image data selection processing for selecting image data using for the sake of printing from among the image data captured by said image data acquisition processing;
a page layout storage processing for storing plural kinds of page layouts;
a page layout selection processing for selecting layout using for the sake of printing from among said plural kinds of page layouts stored in said page layout storage processing; and
a printing data preparation processing for preparing printing data that the image data selected by said printing image data selection processing is subjected to layout in accordance with a page layout selected by said page layout selection processing.

7. A storage medium storing therein a program of a 'WWW'-browser (7) for accessing an 'Web'-page (8) to be an 'HTML'-file (61) including an animation program (62), for causing a computer (1) to execute the following processing of:
an 'HTML'-file interpretation processing for interpreting respective contents of said 'HTML'-file (61), said animation program (62), and said image information (81);
an image information acquisition processing for acquiring information concerning an animation within said 'Web'-page (8) according to interpretation result of said 'HTML'-file interpretation processing;
an image data acquisition variable establishment processing for establishing a parameter inputted as an image data acquisition variable;
an image data read-out processing for acquiring an image data in such a way of accessing an image file on an 'Web'-server based on information acquired by said image information acquisition processing and value establishment by said image data acquisition variable establishment processing; and
a printing image data selection processing for selecting image data using for the sake of printing from among the image data read by said image data read-out processing.

8. A storage medium storing therein a program of a 'WWW'-browser (7) for accessing an 'Web'-page (8) to be an 'HTML'-file (61) including an animation program (62), for causing a computer (1) to execute the following processing of:
an 'HTML'-file interpretation processing for interpreting respective contents of said 'HTML'-file (61), said animation program (62), and said image information (81);
an image information acquisition processing for acquiring information concerning an animation within said 'Web'-page (8) according to interpretation result of said 'HTML'-file interpretation processing;
an image data acquisition variable establishment processing for establishing a parameter inputted as an image data acquisition variable;
an image data read-out processing for acquiring an image data in such a way of accessing an image file on an 'Web'-server based on information acquired by said image information acquisition processing and value establishment by said image data acquisition variable establishment processing;
a printing image data selection processing for selecting image data using for the sake of printing from among the image data read by said image data read-out processing;
a page layout storage processing for storing plural kinds of page layouts;
a page layout selection processing for selecting layout using for the sake of printing from among said plural kinds of page layouts stored in said page layout storage processing; and
a printing data preparation processing for preparing printing data that the image data selected by said printing image data selection processing is subjected to layout in accordance with a page layout selected by said page layout selection processing.
